# EUROPEAN PATENT APPLICATION

(11) **EP 4 631 660 A1**
(43) Date of publication of application: **15.10.2025**
(21) Application number: 23900353.6
(22) Date of filing: 01.11.2023
(51) Int. Cl.: B23K 9/095

(54) **WELDING DEVICE AND WELDING CONTROL PROGRAM**

(30) Priority: 07.12.2022 JP 2022195274
(71) Applicant: Sumitomo Heavy Industries, Ltd., Tokyo 141-6025 (JP)
(72) Inventor: SAKAI, Yuya, Yokosuka-shi, Kanagawa 237-8555 (JP); ETO, Haruhiko, Yokosuka-shi, Kanagawa 237-8555 (JP)
(74) Representative: Louis Pöhlau Lohrentz
(86) International application number: PCT/JP2023/039457
(87) International publication number: WO 2024/122231

(57) **Abstract**

A welding device 1 includes an imaging unit 27 that acquires an image including a welded portion, a current sensor 28 that measures a welding current, and a control unit 47. The control unit 47 switches between first welding control that is performed based on a welding image acquired by the imaging unit 27 and second welding control that is performed based on the welding current measured by the current sensor 28. Therefore, for example, even when occlusion of the imaging unit 27 occurs, it is possible to continue welding control using the welding current. As a result, it is possible to suitably perform control related to welding.

## Description

### Technical Field

The present invention relates to a welding device and a welding control program.

### Background Art

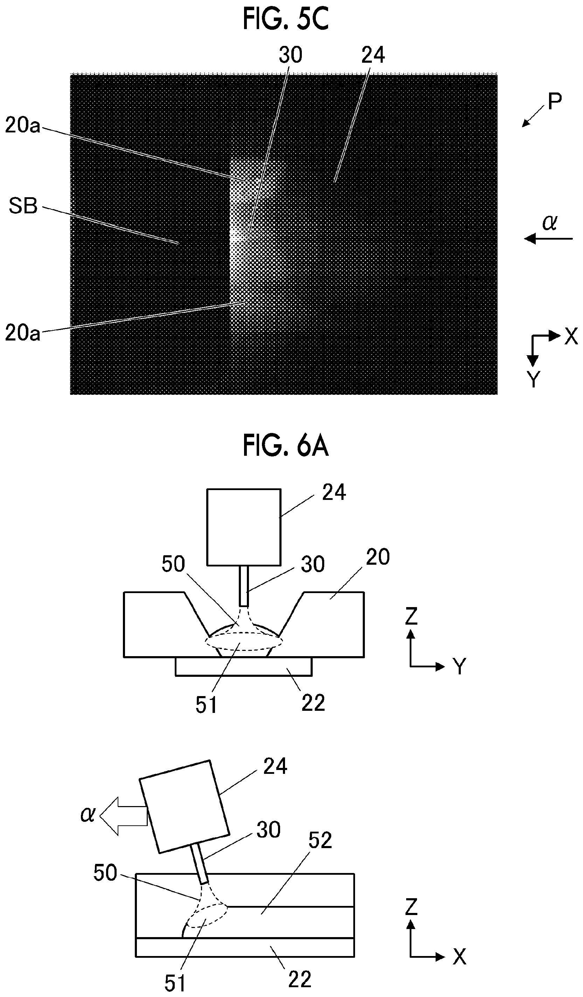

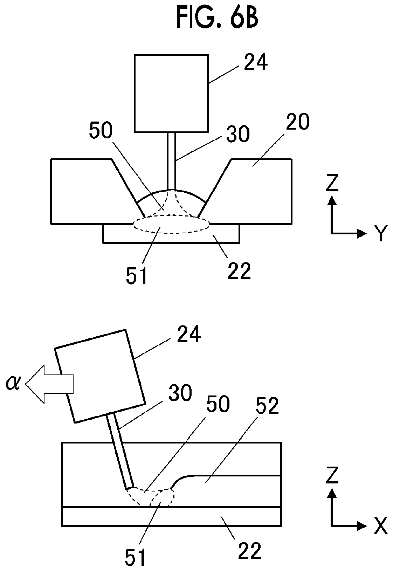

In arc welding, it is necessary to perform optimal torch operation control according to various differences in conditions such as a thickness of a workpiece, a shape of a groove, a root gap width, the quality of a backing material, a welding current, and a welding voltage. In particular, when the root gap width is not uniform or when a first layer is welded on a ceramic backing material, it is difficult to automate welding. When the root gap width changes, it is necessary to adjust a traveling speed of the torch according to the root gap width to properly maintain the amount of deposited metal. When a joint and a traveling direction of the torch are not always parallel, so-called tracking control that moves the torch along the center of the joint is required. When the height and angle of the torch and the workpiece are constant, the above-described traveling speed and center tracking are the main control targets. When the gap width is too large, a weaving operation of oscillating the torch in a width direction is also required. Furthermore, in the welding of the first layer on the ceramic backing material, when the traveling speed of the torch is too low, sufficient penetration is not obtained. On the other hand, when the traveling speed is too high, a molten pool is not capable of following a welding wire, which makes it difficult to maintain arc discharge (see Fig. 6).

Since the state of the molten pool is affected by the welding condition such as the root gap width, it is desirable to sense the state of the root gap and a molten portion during welding and to adjust the traveling speed of the torch.

A method using a visual sensor is known as a sensing method for this purpose. The visual sensor is used to obtain information, such as the position and shape of the molten pool and the position of a tip of the welding wire, and a captured image is analyzed to obtain a desired feature value.

For example, in the technique described in PTL 1, for groove welding having a root gap, a position of a root end portion and a position of a tip of a molten portion are detected as feature values from an image obtained by imaging the molten portion and the surroundings thereof, and a traveling speed of a torch or the like is controlled using numerical values of the feature values.

### Citation List

### Patent Literature

[PTL 1] Japanese Patent No. 7075311

### Summary of Invention

### Technical Problem

However, in a control method depending on image information, for example, when occlusion of the visual sensor, in which the molten portion is obscured by some obstacle, occurs, it is not possible to acquire the desired feature value, which makes it difficult to continue control.

The present invention has been made in view of the above circumstances, and an object of the present invention is to suitably perform control related to welding.

### Solution to Problem

According to the present invention, there is provided a welding device including: an image acquisition means for acquiring an image including a welded portion; a first control means for performing control related to welding, based on the image acquired by the image acquisition means; a measurement means for measuring a parameter related to a welding condition; a second control means for performing the control related to welding, based on the parameter measured by the measurement means; and a switching means for switching between the first control means and the second control means.

### Advantageous Effects of Invention

According to the present invention, it is possible to suitably perform control related to welding.

### Brief Description of Drawings

Fig. 1 is a view showing a welding device according to an embodiment.
Fig. 2 is a block diagram showing a schematic control configuration of the welding device according to the embodiment.
Fig. 3 is a perspective view showing the surroundings of a welded portion according to the embodiment.
Fig. 4 is a flowchart showing a procedure of a welding support process according to the embodiment.
Fig. 5A is a view showing an example of an image of the surroundings of the welded portion before welding is performed.
Fig. 5B is a view showing an example of a welding image during welding.
Fig. 5C is a view showing an example of a welding image in which the welded portion is obscured.
Fig. 6A is a view showing a welding state.
Fig. 6B is a view showing the welding state.

### Description of Embodiments

Hereinafter, an embodiment of the present invention will be described in detail with reference to the drawings.

### [Configuration of Welding Device]

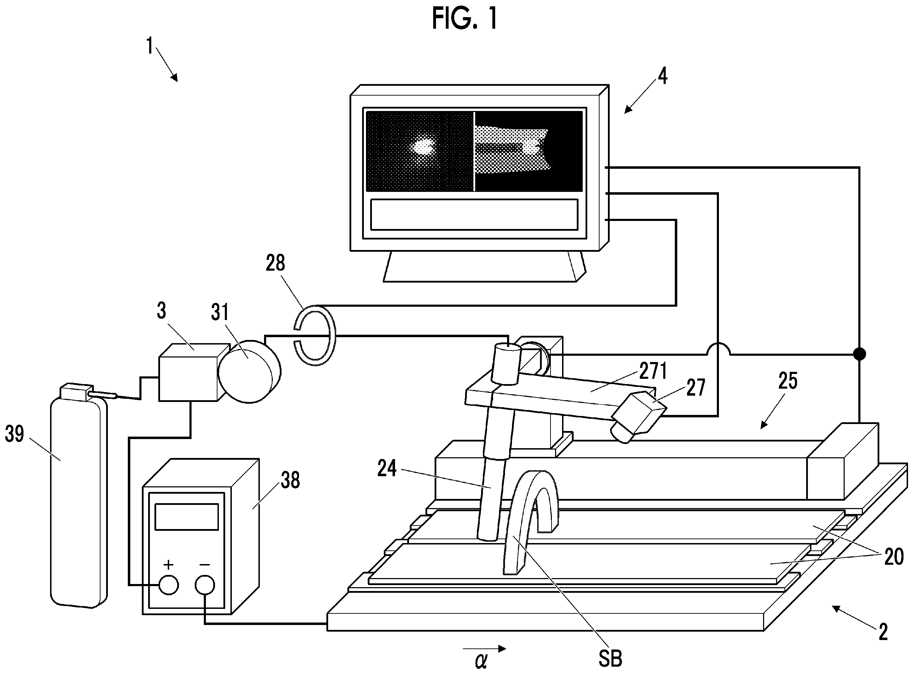

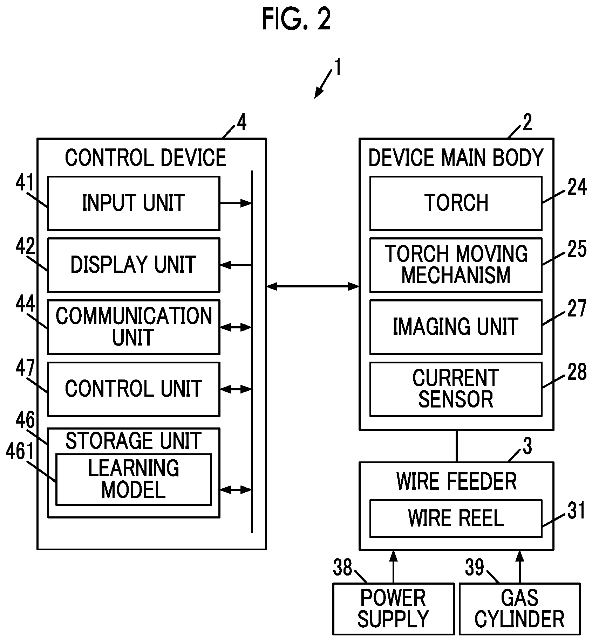

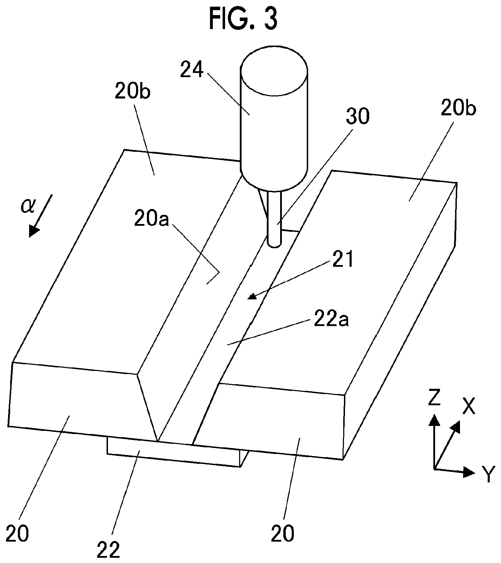

Fig. 1 is a view showing a welding device 1 according to the present embodiment, Fig. 2 is a block diagram showing a schematic control configuration of the welding device 1, and Fig. 3 is a perspective view showing the surroundings of a welded portion.

As shown in Figs. 1 and 2, the welding device 1 is a device that automatically performs welding work on a workpiece (an object to be welded) which is a plate material (steel plate) 20. Specifically, the welding device 1 includes a device main body 2, a wire feeder 3, and a control device 4.

The device main body 2 welds the iron plate material (steel plate) 20 installed substantially horizontally while moving a torch (welding torch) 24 in a direction of an arrow α using a torch moving mechanism 25. More specifically, the device main body 2 according to the present embodiment performs V-shaped groove welding on two plate materials 20 using arc welding. That is, the two plate materials (steel plates) 20 in which end portions have been cut obliquely to be groove surfaces 20a are abutted against each other to form a joint of a V-shaped groove 21, and welding is performed so as to fill the groove (groove) 21 (see Fig. 3). A ceramic backing material 22 is disposed in a bottom portion of the groove 21, and a surface of the backing material 22 is a bottom surface (root) 22a of the groove 21. For example, the groove 21 has a width of approximately 5 mm and a depth of approximately 10 mm, depending on the use of the plate materials 20. In addition, in the following description, the X, Y, and Z directions perpendicular to each other are set as shown in Fig. 3. In the present embodiment, an XY plane is horizontal, and the Z direction is a vertical direction. In addition, a longitudinal direction of the groove 21 is parallel to the X direction, a width direction of the groove 21 is parallel to the Y direction, and a depth direction of the groove 21 is parallel to the Z direction. A movement direction (α direction) of the torch 24 is the -X direction. Further, in the following description, the X, Y, and Z directions may be represented by lowercase letters (x, y, and z).

The torch 24 melts a wire (filler metal) 30 to fill the groove 21 with the melted wire, thereby welding the plate materials 20 together. The torch 24 according to the present embodiment performs arc welding using arc discharge.

The torch moving mechanism 25 supports the torch 24 to be displaceable (movable) in each of the X, Y, and Z directions. More specifically, the torch moving mechanism 25 can appropriately change the (relative) position, (relative) posture, and (relative) speed of the torch 24 with respect to the workpiece (plate material 20). In addition, in Fig. 1, an electric slider is given as an example of the torch moving mechanism 25. However, the torch moving mechanism 25 is not limited thereto and may be, for example, an articulated robot, a bogie-type device that travels on wheels, or the like.

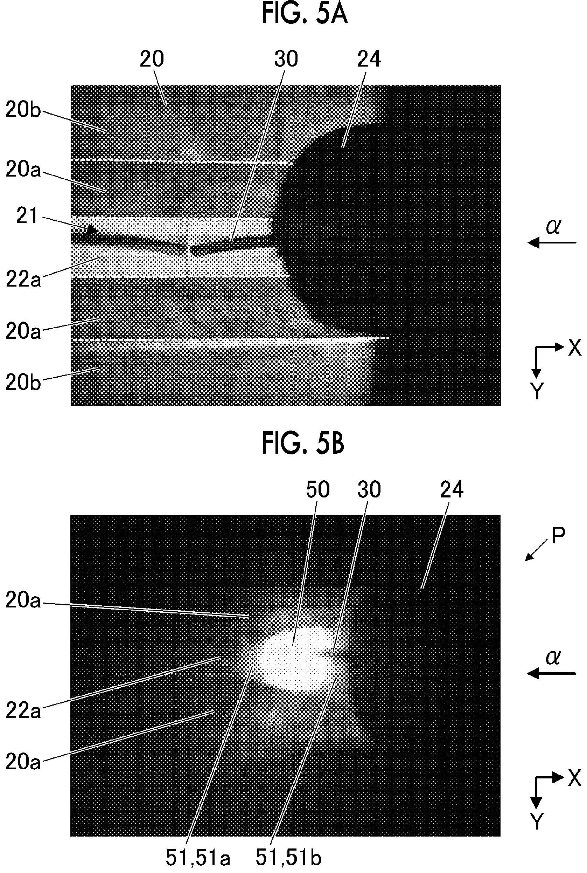

An imaging unit 27 is fixed to the torch 24 through a support member 271. The imaging unit 27 is configured as, for example, a CMOS camera, a CCD camera, or the like, images objects to be imaged including the torch 24 and the plate material 20 (groove 21), and acquires image information thereof. The acquired image information is transmitted to the control device 4. The imaging unit 27 according to the present embodiment images a welded portion (including an arc 50 occurring during welding) at a tip of the torch 24 (wire 30) and the surroundings of the welded portion from obliquely above in a traveling direction (-X direction) of the torch 24 (see Figs. 5A and 5B).

Arc light emitted from the welded portion is powerful and causes whiteout in a normal camera. Therefore, a neutral density filter is attached to the imaging unit 27, or a wide dynamic range camera is used. The imaging unit 27 may be a monochrome camera or a color camera. When a color image is used, color information can also be utilized to perform, for example, the training of a learning model. Therefore, it is expected that the inference accuracy of deep learning, which will be described below, will be improved.

When a liquid crystal filter that is automatically turned on and off in response to external light is used as the neutral density filter, the filter is turned off in a state in which welding is not performed, and the welded portion can be visually recognized from the captured image. This is useful when the operator aligns the position of the torch 24.

In addition, in order to improve visibility, a light source that illuminates an imaging range may be provided in the device. In this case, a light source which is a specific wavelength may be used to emit light to the welded portion during welding. A bandpass filter is attached to the imaging unit 27 to selectively capture light having the wavelength of the light source. When a wavelength different from the wavelength of the arc light is selected as the light source, it is easy to clearly image a region illuminated by the light source without being affected by the arc light.

The wire feeder 3 feeds the wire 30 for welding, power, and a shield gas to the torch 24 of the device main body 2.

An electric wire reel 31 around which the wire 30 is wound is attached to the wire feeder 3. The wire 30 wound around the wire reel 31 is unwound from the wire reel 31 and is guided to the tip of the torch 24 through the inside of the torch 24.

The wire feeder 3 is connected to a power supply 38 that can supply power. The power supplied from the power supply 38 to the wire feeder 3 is applied to the torch 24 through a power line.

The wire feeder 3 is connected to a gas cylinder 39 filled with the shield gas. The shield gas is, for example, carbon dioxide or a mixed gas of carbon dioxide and argon. The shield gas supplied from the gas cylinder 39 to the wire feeder 3 is supplied to the torch 24 together with the wire 30.

In addition, the wire 30 or the like may be automatically supplied from the wire feeder 3 or may be supplied under the control of the control device 4. Further, a shield material that blocks contact between a molten metal and air is not limited to gas and may be, for example, a powdery material.

A current sensor (clamp meter) 28 is attached to a welding torch cable for supplying power or the like from the wire feeder 3 to the device main body 2. The current sensor 28 measures a welding current (arc current) supplied to the torch 24 and outputs the measured welding current to the control device 4. In addition, the current sensor 28 may not be a clamp meter as long as it can measure the welding current.

The control device 4 performs integrated control on the welding device 1 and is configured as, for example, a personal computer. Specifically, the control device 4 includes an input unit 41, a display unit 42, a communication unit 44, a storage unit 46, and a control unit 47.

The input unit 41 is an operation means used for an operator to perform various operations for operating the control device 4 and includes a pointing device, such as a mouse, and a keyboard.

The display unit 42 is configured as, for example, a liquid crystal display, an organic EL display, or other displays and displays various types of information based on a display signal from the control unit 47. In addition, the display unit 42 may be a touch panel that also serves as a portion of the input unit 41 or may output voice.

The communication unit 44 is a communication device that can transmit and receive various types of information to and from the device main body 2 and the like.

The storage unit 46 is a memory configured as a random access memory (RAM), a read only memory (ROM), or the like, stores various types of programs and data, and also functions as a work area for the control unit 47. A learning model 461 is stored in the storage unit 46 according to the present embodiment.

The learning model 461 extracts information of a region from the captured image (welding image) of the welded portion, is constructed in advance by machine learning, and is stored in the storage unit 46. For example, the learning model 461 is generated by deep learning using a deep neural network.

Further, a program for executing a welding support process which will be described below is stored in advance in the storage unit 46 according to the present embodiment.

The control unit 47 is configured as, for example, a central processing unit (CPU) and controls the operation of each unit of the control device 4. Specifically, the control unit 47 operates each unit of the welding device 1 based on, for example, the content of the operation of the input unit 41, deploys the program stored in the storage unit 46 in advance, and executes various processes in cooperation with the deployed program.

### [Welding Support Process]

Next, the welding support process executed during welding work by the welding device 1 will be described.

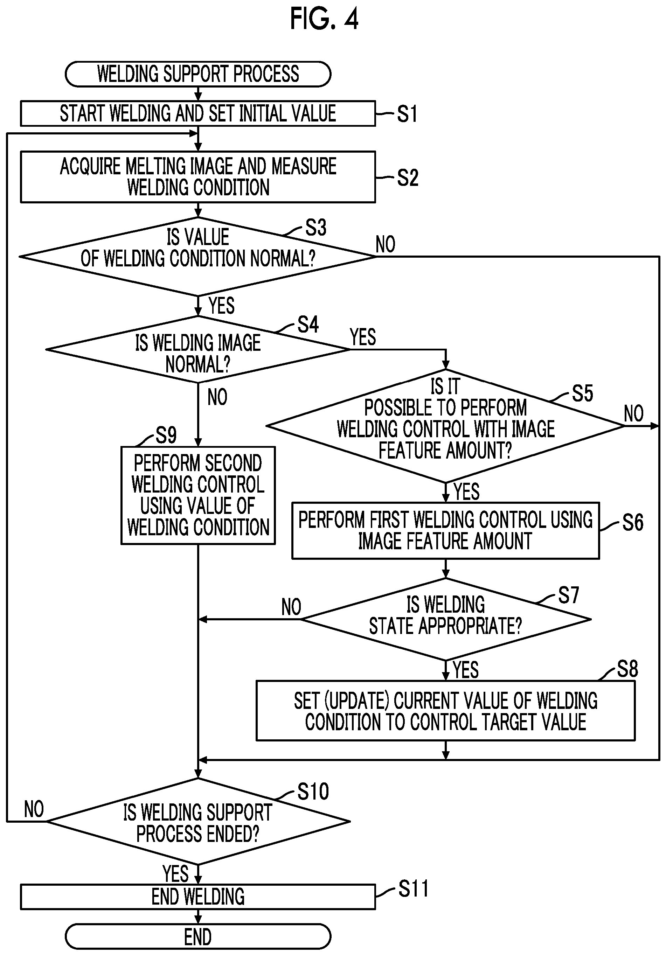

Fig. 4 is a flowchart showing a procedure of the welding support process. Figs. 5A, 5B, and 5C are views showing examples of the images captured by the imaging unit 27. Among these, Fig. 5A shows an image of the surroundings of the welded portion before welding is performed, Fig. 5B is a welding image during welding, and Fig. 5C is a welding image in which the welded portion is obscured. Figs. 6A and 6B are views showing a welding state.

The welding support process is a process that performs control related to welding while switching a control method as necessary such that automatic welding is suitably performed. For example, the control unit 47 reads out the corresponding program from the storage unit 46 based on the operation of the operator and deploys the program to execute the welding support process.

As shown in Fig. 4, when the welding support process is executed, first, the control unit 47 starts the work of performing groove welding on the workpiece in the device main body 2 (Step S1).

In this welding work, the control unit 47 supplies the wire 30 downward from the tip (lower end) of the torch 24 and melts the wire 30 to weld the plate materials 20 together while moving the torch 24 along the groove (weld groove) 21. In addition, for various numerical values used for control, appropriate initial values are set in advance as necessary.

Then, the control unit 47 acquires a captured image (welding image P) including the welded portion and measures the value of a parameter (a welding current in the present embodiment) related to a welding condition (Step S2).

Here, first, the control unit 47 acquires, for example, the welding image P shown in Fig. 5(b) using the imaging unit 27. The acquired welding image P is stored in the storage unit 46. A normal welding image P includes the wire 30 and the workpiece supplied from the tip of the torch 24, the arc 50 occurring between the wire 30 and the workpiece, a molten pool 51 formed by melting the wire 30 with the arc 50 (a front molten pool 51a on the front side of the arc 50 in the traveling direction and a rear molten pool 51b on the rear side), a root 22a, and the groove surface 20a. In addition, the control unit 47 displays the captured welding image P on the display unit 42 in real time.

Further, here, the control unit 47 measures the welding current (arc current) as the parameter related to the welding condition using the current sensor 28.

Furthermore, the "parameter related to the welding condition (hereinafter, referred to as a "welding condition parameter")" is not limited to the welding current and includes at least one of the relative position (the Y-direction position and Z-direction position), relative posture (angle), and relative speed of the torch 24 with respect to the workpiece, a welding voltage, a wire feed speed, and a shield gas flow rate. When other welding condition parameters are used instead of (or in combination with) the welding current, it is of course necessary to include a measurement means (sensor) that can measure the welding condition parameters.

Then, the control unit 47 determines whether or not the value of the welding condition parameter (welding current) acquired in Step S2 is normal (Step S3).

Here, the control unit 47 determines whether or not the value of the welding current is normal, based on whether or not the value of the welding current is within a predetermined normal range that has been set in advance. More specifically, in this step, measurement data of the welding current that has been measured and subjected to noise removal or the like is compared with the normal range (abnormality determination value) and stored in the storage unit 46. The storage unit 46 stores a raw value and a processed value of the measurement data.

Then, when it is determined that the value of the welding current is not normal (Step S3; No), the control unit 47 shifts the process to Step S10 which will be described below.

When it is determined in Step S3 that the value of the welding current is normal (Step S3: Yes), the control unit 47 determines whether or not the welding image P acquired in Step S2 is normal (Step S4).

Here, when the welded portion is obscured in the welding image P, the control unit 47 determines that the welding image P is not normal since a feature value (image feature value) required for welding control (Step S6 which will be described below) is not capable of being extracted from the welding image P.

For example, as shown in Fig. 5(c), when occlusion of the imaging unit 27 in which a molten portion is obscured by some obstacle occurs, it is not possible to acquire the image feature value from the welding image P. In the example shown in Fig. 5(c), a portion in front of (the left side in Fig. 5(c)) the tip portion of the torch 24 is obscured and darkened. For example, a strongback SB (see Fig. 1) is given as an example of the obstacle. The strongback SB is a jig that is temporarily attached in order to correct misalignment between the plate materials 20 or to prevent angular deformation or twisting.

Specifically, for example, the control unit 47 calculates a histogram of the welding image P and determines that the welded portion including the arc 50 is obscured when the histogram is darker than a predetermined brightness distribution. However, a method for determining whether or not the welded portion is obscured is not limited to this method. The determination method may not be a method using image processing. For example, the strongback SB may be detected by a distance sensor or the like attached to the device main body 2 to determine whether or not the welded portion is obscured.

When it is determined in Step S4 that the welding image P is normal (Step S4; Yes), the control unit 47 determines whether or not (continuation of) it is possible to perform the welding control in Step S6 which will be described below, based on the image feature value extracted from the welding image P (Step S5).

Here, when the image feature value extracted from the welding image P is within a predetermined appropriate range that has been set in advance, the control unit 47 determines that it is possible to perform the welding control with the image feature value.

Then, when it is determined that it is not possible to perform the welding control with the image feature value extracted from the welding image P (Step S5; No), the control unit 47 shifts the process to Step S10 which will be described below.

When it is determined in Step S5 that it is possible to perform the welding control with the image feature value extracted from the welding image P (Step S5; Yes), the control unit 47 executes the welding control (first welding control) using the image feature value (Step S6).

In this step, the processed data of the welding image P is used as a controlled variable, a manipulated variable is determined from an error between the controlled variable and a control target value, and feedback-control of the controlled variable is performed. As the manipulated variable, for example, the following are considered: the relative position (the Y-direction position and Z-direction position), relative posture (angle), and relative speed (including a traveling speed) of the torch 24 with respect to the workpiece; the welding current and the welding voltage; the wire feed speed; and the shield gas flow rate. When weaving is performed, examples of the manipulated variable further include the period, waveform, and width of the weaving. In this step, at least one of these values may be controlled. In addition, the feature value may be used as the controlled variable, or the feature value or the controlled variable may be used as the manipulated variable.

Specifically, the control unit 47 performs "molten pool control" and "(center) tracking control" as the welding control (control related to welding).

Of the control methods, the "molten pool control" is the control of the traveling speed of the torch 24 (wire 30) along the X direction.

As shown in Fig. 6A, when the traveling speed of the tip of the wire 30 is lower than the traveling speed of the molten pool 51, the position of the arc 50 on the molten pool 51 retreats in the traveling direction. On the other hand, as shown in Fig. 6B, when the traveling speed of the tip of the wire 30 is higher than the traveling speed of the molten pool 51, the position of the arc 50 on the molten pool 51 advances in the traveling direction. In addition, when a disturbance factor, such as a variation in the shape of the workpiece, is present, the state of the arc 50 is unstable, and it is difficult to maintain an appropriate welding state (the state of the welded portion (and the surroundings thereof)) even when the tip of the wire 30 is simply advanced at a constant speed. Therefore, the molten pool control for controlling the traveling speed of the torch 24 (wire 30) is performed according to the state of the molten pool 51.

Specifically, the control unit 47 inputs the welding image P to the learning model 461 to classify (divide) the welding image P into a plurality of regions, thereby extracting image feature values representing the position of the tip of the wire 30, the presence or absence of the front molten pool 51a, and the position of the tip of the arc 50. Then, the control unit 47 controls the traveling speed of the torch 24 based on these image feature values to eliminate, for example, the front molten pool 51a.

Further, in this step, the molten pool control may be performed based on the welding image P. The image feature values used for the molten pool control, a specific method for calculating the image feature values, and the like are not particularly limited. For example, an image processing algorithm that does not use the learning model 461 may be used.

The "tracking control" is control to position the tip of the torch 24 (wire 30) at the center of the width (root gap) of the root 22a in the Y direction.

Welding needs to be performed along the center of the root gap. Therefore, it is necessary to adjust the position of the torch 24 such that the wire 30 passes through the center of the root gap. When the position can be adjusted such that the joint and the traveling direction of the torch 24 are parallel, control for center tracking is not necessary. However, in general, the parallelism between the two is not guaranteed. In order to perform the center tracking, for example, the position of the torch 24 in the Y direction may be controlled such that the Y-coordinate of the position of the tip of the wire 30 obtained as the feature value and the Y-coordinate of the position of the center of the root gap width are matched with each other.

Further, in addition to the "molten pool control" in the X direction and the "tracking control" in the Y direction, the position of the tip of the torch 24 (wire 30) in the Z direction (height) may be controlled. Specifically, for example, reference laser light may be emitted to the joint from the side of the torch 24, and the height of the torch 24 may be controlled such that the laser light is always located at a predetermined position of the welding image P.

Then, the control unit 47 determines whether or not the welding state is appropriate (Step S7).

Here, the control unit 47 determines whether or not the welding state is within a predetermined appropriate range, based on the image feature values (for example, the image feature value indicating whether or not the front molten pool 51a is present and the like) extracted from the welding image P.

Then, when determining that the welding state is not appropriate (Step S7; No), the control unit 47 shifts the process to Step S10 which will be described below.

When it is determined in Step S7 that the welding state is appropriate (Step S7; Yes), the control unit 47 sets (updates) the value of the welding condition parameter (the welding current in the present embodiment) at this time as the control target value thereof and stores the value in the storage unit 46 (Step S8).

On the other hand, when it is determined in Step S4 that the welding image P is not normal (Step S4; No), the control unit 47 executes the welding control (second welding control) using the welding condition parameter (Step S9).

In this step, the welding control that is substantially the same as that in Step S6 is performed. However, here, since it is not possible to obtain the image feature value required for the welding control from the welding image P, the welding control (the molten pool control and the tracking control) using the welding current as the controlled variable is performed.

Specifically, the molten pool control is performed by manipulating the traveling speed of the torch 24 based on the processed value and the control target value of the welding current. The control target value is the latest value (an initial value before initial setting) set (updated) in Step S8.

In addition, the tracking control is performed by creating a virtual welding line at the time of hiding, based on the feature value of the workpiece acquired before hiding and design drawing information of the workpiece.

Then, the control unit 47 determines whether or not to end the welding support process (Step S10). When determining not to end the welding support process (Step S10; No), the control unit 47 shifts the process to Step S2.

On the other hand, when determining to end the welding support process (Step S10; Yes), the control unit 47 ends the welding work (Step S11) and ends the welding support process.

### [Technical Effect of the Present Embodiment]

As described above, according to the present embodiment, the first welding control (Step S6) based on the welding image P acquired by the imaging unit 27 and the second welding control (Step S9) based on the welding current (welding condition parameter) measured by the current sensor 28 are switchable.

Therefore, even when, for example, the occlusion of the imaging unit 27, in which the molten portion is obscured by some obstacle, occurs, it is possible to continue the welding control using the welding current (welding condition parameter). As a result, it is possible to suitably perform control related to welding.

In addition, according to the present embodiment, when it is determined that the welding image P is normal, the first welding control is performed. When it is determined that the welding image P is not normal, the welding control is switched from the first welding control to the second welding control. That is, the first welding control based on the welding image P is selected in a normal state. When the first welding control is selected and it is determined that the welding image P is not normal, the welding control is switched from the first welding control to the second welding control.

Therefore, the welding control is suitably performed based on the welding image P in the normal state. When an abnormality occurs in the welding image P, it is possible to continue the welding control using the welding current (welding condition parameter).

Further, according to the present embodiment, when the second welding control based on the welding current (welding condition parameter) is selected and it is determined that the welding image P is normal, the welding control is switched from the second welding control to the first welding control.

Therefore, even after the welding control is switched to the second welding control based on the welding current (welding condition parameter) due to the occurrence of an abnormality in the welding image P, the second welding control can be quickly returned to the first welding control based on the welding image P as soon as the welding image P returns to the normal state.

In addition, according to the present embodiment, when the welded portion is obscured in the welding image P, it is determined that the welding image P is not normal.

Therefore, it is possible to easily determine whether or not the welding image P is abnormal.

Further, according to the present embodiment, when the first welding control is selected, the value of the welding current is measured (updated) at any time by the current sensor 28. When the welding control is switched from the first welding control to the second welding control, the welding control is performed using, as the control target value, the latest value of the welding current measured while the first welding control is being executed.

Therefore, it is possible to execute the second welding control based on the welding current (welding condition parameter) so as to maintain the welding state by the first welding control based on the welding image P.

### [Others]

The embodiment of the present invention has been described above. However, the present invention is not limited to the above-described embodiment.

For example, in the welding support process, when the welding work is ended (Step S11) since the value of the welding current (welding condition parameter) is abnormal (Step S3; No) or since it is difficult to continue the welding control with the image feature value of the welding image P (Step S5; No), an emergency stop measure different from the normal stop of the device may be adopted.

In addition, in the above-described embodiment, in Step S4 of the welding support process, it is determined that the welding image P is not normal (abnormal) when the welded portion is obscured in the welding image P. However, the condition for determining the welding image P to be abnormal is not limited thereto. When it is not possible to acquire the image feature value required for the first welding control from the welding image P, it may be determined that the welding image P is abnormal.

Further, in the above-described embodiment, the first welding control based on the welding image P is performed in the normal state. When the welding image P is not normal, the welding control is switched to the second welding control based on the welding condition parameter. However, the second welding control may be executed in the normal state, and the welding control may be switched to the first welding control, for example, when there is an abnormality in the measurement of the welding condition parameter.

Furthermore, in the above-described embodiment, the case where the ceramic backing material 22 is present and the traveling speed of the torch 24 is controlled for the V-groove welding has been described. However, the application target of the present invention is not limited to this case as long as the workpiece is welded by the torch. For example, the above-described embodiment can also be applied to groove shapes different from that in the above-described embodiment or to fillet welding. However, in this case, the configuration or shape of the region in the captured image may change. Therefore, it is necessary to adjust, for example, the learning of the learning model and the definition of the feature value for each target.

In addition, in the above-described embodiment, the case where automatic welding control is performed has been described. However, the present invention can also be suitably applied to a case where the operator manually controls parameters other than the controlled variable. For example, the traveling speed of the torch 24 may be automatically controlled by the present invention, and a configuration may be adopted in which the operator manually controls the position of the torch 24 in the Y direction while viewing the welding image.

Further, the control device 4 may be configured integrally with the device main body 2 or may be configured to be capable of remotely operating the device main body 2.

In addition, the details of the above-described embodiment can be appropriately changed without departing from the gist of the present invention.

### Industrial Applicability

As described above, the present invention is useful for suitably performing control related to welding.

### Reference Signs List

- 1: Welding device
- 2: Device main body
- 3: Wire feeder
- 4: Control device
- 20: Plate material (workpiece)
- 24: Torch (welding torch)
- 25: Torch moving mechanism
- 27: Imaging unit (image acquisition means)
- 28: Current sensor (measurement means)
- 30: Wire
- 46: Storage unit
- 47: Control unit (first control means, second control means, switching means)
- 50: Arc
- 51: Molten pool
- 51a: Front molten pool
- P: Welding image
- SB: Strongback

## Claims

1. A welding device comprising:
an image acquisition means for acquiring an image including a welded portion;
a first control means for performing control related to welding, based on the image acquired by the image acquisition means;
a measurement means for measuring a parameter related to a welding condition;
a second control means for performing the control related to welding, based on the parameter measured by the measurement means; and
a switching means for switching between the first control means and the second control means.

2. The welding device according to claim 1,
wherein the switching means selects the first control means in a normal state, and
when the first control means is selected, in a case where the image acquired by the image acquisition means is determined to be abnormal, the switching means performs switching from the first control means to the second control means.

3. The welding device according to claim 2,
wherein, when the second control means is selected, in a case where the image acquired by the image acquisition means is determined to be normal, the switching means performs switching from the second control means to the first control means.

4. The welding device according to claim 2 or 3,
wherein the switching means determines that the image is not normal when the welded portion is obscured in the image acquired by the image acquisition means.

5. The welding device according to claim 1,
wherein, when the first control means is selected, the switching means measures a value of the parameter at any time using the measurement means, and
when the switching from the first control means to the second control means is performed, the switching means performs the control related to the welding using, as a control target value, a latest value of the parameter measured when the first control means is selected.

6. The welding device according to claim 1,
wherein the first control means and the second control means control at least one of a relative position, relative posture, and relative speed of a welding torch with respect to a workpiece, a welding current, and a period, waveform, and width of weaving as the control related to the welding.

7. The welding device according to claim 1,
wherein the parameter related to the welding condition includes at least one of a relative position, relative posture, and relative speed of a welding torch with respect to a workpiece, a welding current, a welding voltage, a wire feed speed, and a shield gas flow rate.

8. A welding control program causing a computer of a welding device including an image acquisition means for acquiring an image including a welded portion and a measurement means for measuring a parameter related to a welding condition to function as:
a first control means for performing control related to welding, based on the image acquired by the image acquisition means;
a second control means for performing the control related to welding, based on the parameter detected by the measurement means; and
a switching means for switching between the first control means and the second control means.
